# EUROPÄISCHE PATENTSCHRIFT

(11) **EP 0 738 840 B1**
(45) Veröffentlichungstag und Bekanntmachung des Hinweises auf die Patenterteilung: **09.06.1999**
(21) Anmeldenummer: 96105675.1
(22) Anmeldetag: 11.04.1996
(51) Int. Cl.: F16G 3/04

(54) **Riemenverbinder**
Belt fastener
Dispositif de jonction de courroie

(30) Priorität: 20.04.1995 DE 19514658; 01.12.1995 DE 19544810
(43) Veröffentlichungstag der Anmeldung: 23.10.1996
(73) Patentinhaber: GORO S.A., F-30340 Saint Privat des Vieux (FR)
(72) Erfinder: Schick, Jean-Francois, F - 34980 Montferrier/Lez (FR)
(74) Vertreter: Honke, Manfred, Dr.-Ing.

(56) Entgegenhaltungen:
- EP-A- 0 324 290
- DE-A- 4 012 877
- DE-A- 4 416 079
- DE-C- 4 407 857
- FR-A- 2 196 683
- FR-A- 2 380 471
- DATABASE WPI Week 8401 Derwent Publications Ltd., London, GB; AN 84-003610 XP002009567 & JP 58 199 849 A (NIPPON KINZOKU KOGY) , 21.November 1983
- C. CHAUSSIN / G. HILLY: "METALLURGIE, Band I, "Alliages métalliques" 1967 , DUNOD , PARIS, FR. XP002009566, Seite 177.

## Beschreibung

Die Erfindung betrifft die Verwendung von austenitischem Mangan-Hartstahl zur Herstellung eines Kupplungsstabes zur Kupplung von Riemenverbindern mit U-förmigen Verbinderklammern beim Verbinden der Bandenden von Transportbändern.

Bei mittels Riemenverbindern verbundenen Bandenden von Transportbändern greifen die Scharnierbögen der Riemenverbinder bzw. die Verbinderklammern scharnierartig ineinander und nehmen eine gemeinsamen Kupplungsstab auf. Infolge der hohen an den Scharnierbögen und dem Kupplungsstab angreifenden Beanspruchungen, wie Zug-, Biege- und Reibungskräfte, unterliegen die Scharnierbögen und der Kupplungsstab einem extrem hohen Verschleiß. Dieser Verschleiß führt schließlich zu einer Beschädigung der Kupplungsstäbe und der Scharnierbögen und folglich der gesamten Transportbandverbindung. Aus einer solchen Beschädigung der Transportbandverbindung wiederum resultieren kostenaufwendige Reparaturarbeiten und Betriebsstörungen.

Aus diesem Grunde hat man Kupplungsstäbe entwickelt, die eine Seele aus gebündelten Stahldrähten und einen schraubenwendelförmig gewickelten Stahlmantel aufweisen. Andere Ausführungsformen verzichten auf den Stahlmantel und bestehen aus verdrillten Stahldrahtbündeln. Selbst der Einsatz von Glasfaserbündeln und Kohlenstoffaserbündeln ist schon versucht worden, jedoch ohne den gewünschten Erfolg. Bei den Verbinderklammern der Riemenverbinder wird regelmäßig eine Verdoppelung der Scharnierbögendicke vorgesehen, sei es im Wege einer Materialverdrängung oder einer Materialumfalzung. Jedoch lassen sich die Verschleißerscheinungen durch solche Maßnahmen nicht beseitigen, allenfalls die aus dem Verschleiß resultierenden Beschädigungen hinauszögern.

Aus der DE-PS 4 407 857 sind Riemenverbinder mit U-förmigen Verbinderklammern zum Verbinden der Bandenden von Transportbändern bekannt, wobei die Verbinderklammern Scharnierbögen und sich an die Scharnierbögen anschließende Klammerschenkel aufweisen und die über die beiden zu verbindenden Bandenden vorstehenden Scharnierbögen scharnierartig ineinandergreifen und mittels eines durch die Scharnierbögen hindurchgesteckten Scharnierstabes miteinander verbunden sind. Bei diesen Riemenverbindern bestehen die Verbinderklammern und der Scharnierstab aus einem nickelhaltigen Chromstahl. Zumindest die Scharnierbögen und der Scharnierstab weisen eine im Wege einer thermochemischen Diffusion erzeugte Oberflächenbeschichtung auf. Auf diese Weise sollen die zwischen den Scharnierbögen und dem hindurchgeführten Scharnierstab auftretenden Reibungskräfte und Verschleißerscheinungen erheblich reduziert werden. Diese Riemenverbinder haben sich an sich bewährt, sind jedoch insofern verbesserungsfähig, als eine aufwendige Oberflächenbeschichtung vorgenommen werden muß.

Die DE-A 4 012 877 beschreibt einen Riemenverbinder, mit U-förmigen Verbindungsklammern als Blechhakeneinheit. Dabei bildet jede Blechhakeneinheit scharnierartige Hakenösen, die klammerartig ineinandergreifen und zur Verbindung der Gurtenden einen hindurchgeschobenen Kupplungsstab aufweisen. Um die Gefahr des Verbiegens oder Brechens des Kupplungsstabes zu verringern, sind die über die Gurtbreite verteilt angeordneten Hakenösen über querliegende, unteroder oberhalb des Gurtes liegende, durchgehende Hakenbleche zusammenhängend als ein Bewehrungsteil ausgebildet.

In der JP-A-58 199 849 wird beschrieben, daß austenitischer Stahl im Zusammenhang mit Riemenverbindern eingesetzt werden kann.

Außerdem ist ein Kupplungsstab für Riemenverbinder zum Verbinden der Bandenden von Transportbändern bekannt, bei welchem Kernstücke definierter Länge im Inneren von mindestens einem Hüllelement angeordnet sind. Bei diesem bekannten Kupplungsstab besteht das Hüllelement aus einem relativ weichen, sich während des Betriebes verformenden Werkstoff, während die Kernstücke eine derartige Länge aufweisen, daß sie sich jeweils durch mehr als zwei Scharnierbögen der Riemenverbinder erstrecken. Bei dieser Ausführungsform soll das Hüllelement nur zur Herstellung des stabförmigen Gebildes und zum Einführen der Kernstücke in den Scharnierbogenbereich der Riemenverbinder dienen. Jedoch ist das Hüllelement zur Aufnahme der auftretenden Beanspruchungen nicht in der Lage, da es aus einem relativ weichen und sich während des Betriebes verformenden Werkstoff besteht. Vielmehr sollen die auftretenden Beanspruchungen ausschließlich von den Kernstücken übertragen werden. Das kann jedoch schon deshalb nicht gelingen, weil die zwischen den Scharnierbögen der Riemenverbinder und dem Kupplungsstab in ganz erheblichem Maße auftretenden Verschleißbeanspruchungen zwangsläufig zu einer alsbaldigen Beschädigung und schließlich Zerstörung des weichen Hüllelementes führen müssen. Dann geht auch die Lagesicherung der Kernstücke verloren (vgl. DE-A-4 416 079).

Die FR-A-2 380 471 beschreibt einen Riemenverbinder, der eine biegsame Stabachse aus Drahtlitzen aufweist. Zusätzlich sind die biegsame Stabachse umgebende Hülsen als Stabmantel vorgesehen. Die Hülsen bestehen aus gehärtetem Stahl. Verschleißerscheinungen der Scharnierbögen und des Kupplungsstabes können dadurch nicht beseitigt werden. Ein derartiger Riemenverbinder ist ebenfalls aus der FR-A-2 196 683 bekannt.

Die EP-A-0 324 290 beschäftigt sich allgemein mit Riemenverbindern mit mehrteiligem Kupplungsstab, welcher aus einzelnen Elementen zusammengesetzt ist. Die Ausbildung verschiedener Kristallstrukturen im Stahl in Abhängigkeit vom Mangan- oder Kohlenstoffgehalt wird in der Literaturstelle "METALLURGIE, Band I, Alliages métalliques, 1967, Dunod, Paris" von C. Chaussin und G. Hilly beschrieben. Dabei ergeben sich verschiedene Gefüge mit Martensit-, Austenit-, Perlit-Charakter usw..

Der Erfindung liegt die Aufgabe zugrunde, die Verwendung eines Werkstoffes zur Herstellung eines Kupplungsstabes und/oder von Riemenverbindern zum Verbinden der Bandenden von Transportbändern, sowie einen Riemenverbinder anzugeben, die zu extrem hohem Verschleißwiderstand und optimierter Lebensdauer führt.

Zur Lösung dieser Aufgabe lehrt die Erfindung die Verwendung von austenitischem Mangan-Hartstahl zur Herstellung eines Kupplungsstabes zur Kupplung von Riemenverbindern mit U-förmigen Verbinderklammern beim Verbinden der Bandenden von Transportbändern, wobei die Verbinderklammern Scharnierbögen und sich an die Scharnierbögen anschließende Klammerschenkel aufweisen und durch die gelenkig ineinandergreifenden Scharnierbögen von zwei Riemenverbindern der gemeinsame Kupplungsstab hindurchgeführt ist und wobei der Kupplungsstab infolge verschleißbedingender Beanspruchungen zwischen den Scharnierbögen der Verbinderklammern und dem Kupplungsstab in diesen Verschleißzonen eine Oberflächenverfestigung im Wege der Kaltverformung bei unverändert hoher Biegsamkeit erfährt. - Die Erfindung geht von der Erkenntnis aus, daß sich ein austenitischer Mangan-Hartstahl durch einen besonders hohen Verschleißwiderstand und dennoch gute Zähigkeit auszeichnet. Von besonderer Bedeutung ist das Verfestigungsvermögen eines solchen Mangan-Hartstahls und die daraus resultierende Oberflächenverfestigung im Wege einer Kaltverformung. Folglich tritt Oberflächenverfestigung gerade an den beanspruchten Verschleißzonen auf, also in jenen Bereichen des Kupplungsstabes, gegen welche die Scharnierbögen der Verbinderklammern des Riemenverbinders mit verhältnismäßig hohen Zugbeanspruchungen angreifen. Daher erhöht sich der Verschleißwiderstand gezielt in den Scharnierbereichen. Es entsteht folglich an der richtigen Stelle die notwendige Verschleißhärte. Aus diesem Grunde stört auch nicht der verhältnismäßig weiche, jedoch zähe Kern des Kupplungsstabes. Denn zunehmender Verschleiß führt aufgrund der den Verschleiß bedingenden Beanspruchungen zwangsläufig zu einer zunehmenden Oberflächenhärte, so daß der Kern stets von einem verschleißfesten Mantel umgeben ist. In diesem Zusammenhang wird darauf hingewiesen, daß sich die übliche Zugfestigkeit eines Mangan-Hartstahls auf 800 bis 900 N/mm² beläuft. Im Einsatz als Kupplungsstab für Riemenverbinder nimmt diese Zugfestigkeit erheblich zu und wird infolge der zwischen den Scharnierbögen der Verbinderklammern und dem Kupplungsstab auftretenden Beanspruchungen und daraus resultierenden Kaltverformung > 1500 N/mm². Überraschen muß in diesem Zusammenhang, daß der Kupplungsstab dennoch im Kern zäh und bruchsicher bleibt und sich insbesondere durch eine hohe Biegsamkeit und Kerbschlagzähigkeit auszeichnet. Das ist vermutlich auf das austenitische Gefüge des Mangan-Hartstahls zurückzuführen und ferner auf die Tatsache, daß dessen Dehnungsvermögen mehr als 60% betragen kann. Dadurch läßt sich ein Kupplungsstab aus einem austenitischen Mangan-Hartstahl überraschenderweise bis zu 180° halbkreisförmig biegen. Diese Biegsamkeit ist erforderlich, weil Transportbänder häufig in Muldenoder Trapezform geführt werden. - Ferner muß überraschen, daß hoher Verschleißwiderstand selbst dann gegeben ist, wenn beim Transport von Sand od. dgl. Schmirgelwirkung zwischen den Scharnierbögen der Verbinderklammern und dem Kupplungsstab auftritt, weil eben gerade dort der Kupplungsstab infolge seiner Beanspruchung einen erhöhten Verschleißwiderstand erhalten hat. Aus diesem Grunde sieht die Erfindung ferner die Verwendung von austenitischem Mangan-Hartstahl zur Herstellung von U-förmigen Verbinderklammern bei Riemenverbindern zum Verbinden der Bandenden von Transportbändern vor, wobei die Verbinderklammern und folglich ihre Scharnierbögen infolge verschleißbedingender Beanspruchungen eine zunehmende Oberflächenverfestigung erfahren. Folglich zeichnen sich die Scharnierbögen als beanspruchte Zonen der Verbinderklammern durch extrem hohen Verschleißwiderstand aus. Auch in diesem Fall gilt, daß zunehmende Belastung zu einer zunehmenden Oberflächenhärte führt. Darüber hinaus trägt in diesem Zusammenhang die Zähigkeit und hohe Biegsamkeit dazu bei, daß keine Verkantungen zwischen den Scharnierbögen und dem gemeinsamen Kupplungsstab auftreten. Darüber hinaus ist der hohe Verschleißwiderstand für die Riemenverbinder bzw. ihre Verbinderklammern auch deshalb von besonderer Bedeutung, weil nicht länger deren Verschleiß und schließlich Beschädigung beim Überfahren von Bandabstreifern zu befürchten ist, die zur Bandreinigung dienen und mit erheblichen Andrückkräften gegen die zu reinigende Bandfläche angedrückt werden. Solche Bandabstreifer weisen überdies ebenfalls Verschleißleisten auf, deren sonst abrasive Wirkung beim Überfahren der Riemenverbinder nunmehr durch den hohen Verschleißwiderstand der Riemenverbinder und ihre Verfestigungsfähigkeit im Zuge der Beaufschlagung durch die Bandabstreifer zumindest kompensiert wird. Aus diesem Grund empfiehlt die Erfindung außerdem die Verwendung von austenitischem Mangan-Hartstahl zur Herstellung von Befestigungskrampen bei Riemenverbindern mit U-förmigen Verbinderklammern zum Verbinden der Bandenden von Transportbändern, wobei die Verbinderklammern Scharnierbögen und sich an die Scharnierbögen anschließende Klammerschenkel mit Öffnungen für den Durchgang von Befestigungskrampen aufweisen, und wobei die Befestigungskrampen infolge verschleißbedingender Beanspruchungen eine zunehmende Oberflächenverfestigung erfahren. Aufgrund der Zähigkeit und Bruchsicherheit zeichnen sich solche Befestigungskrampen nicht nur durch ihren hohen Verschleißwiderstand gegenüber den Bandabstreifern aus, sondern gewährleisten auch eine einwandfreie Befestigung der Riemenverbinder bzw. ihrer Verbinderklammern auf den Bandenden von Transportbändern. Darüber hinaus ist eine besonders innige Verbindung zwischen den Schenkeln der Befestigungskrampen und dem Bandmaterial gewährleistet, zumal es sich bei den Transportbändern regelmäßig um Gurtbänder handelt.

Nach einem Vorschlag der Erfindung, dem selbständige Bedeutung zukommt, ist vorgesehen, daß für die Herstellung der Kupplungsstäbe und/oder Verbinderklammern und/oder Befestigungskrampen ein austenitischer Mangan-Hartstahl X120Mn12 mit

| | |
|---|---|
| C | 1,10 bis 1,30% |
| Si | 0,30 bis 0,50% |
| Mn | 12,00 bis 13,00% |

verwendet wird, wobei ferner vorhandene Bestandteile wie Phosphor und Schwefel von untergeordneter Bedeutung sind, beispielsweise P ≤ 0,10 und S ≤ 0,04.

Vorzugsweise enthält der austenitische Mangan-Hartstahl als Legierungselement bis zu 0,1% Cer, um seine Verarbeitbarkeit bzw. Bearbeitbarkeit zu erhöhen. Darüber hinaus kann als weiteres Legierungselement 1,0% bis 4,0% Nickel vorgesehen sein, weil Nickel auf die Kornbildung eine verfeinernde Wirkung ausübt, womit zugleich eine größere Zähigkeit bei gleicher Festigkeit verbunden ist. Als weiteres Legierungselement kommt 1,0% bis 2,5% Molybdän in Frage, um eine weitere Erhöhung der Festigkeit und insbesondere der Streckgrenze zu erreichen. Schließlich kann der verwendete austenitische Mangan-Hartstahl bei 850° C bis 1100° C wärmebehandelt und durch Abschrecken bei 1000° C bis 1050° C vergütet bzw. wassergehärtet sein. Der Mangan-Hartstahl ist im abgeschreckten Zustand verhältnismäßig weich, verfestigt sich jedoch bei jeder Beanspruchung bzw. Kaltverformung im Oberflächenbereich, während der Kern verhältnismäßig zäh bleibt. Dadurch werden infolge der auftretenden Beanspruchungen die Riemenverbinder, Kupplungsstangen und Befestigungskrampen hochverschleißfest und bleiben überraschenderweise dennoch biegsam.

Sofern der Riemenverbinder einen Kupplungsstab mit einer biegsamen Stabachse und einem Stabmantel aus die Stabachse umgebenden Hülsen vorgegebenen Länge aufweist, lehrt die Erfindung, gemäß einer weiteren Lösung der gestellten Aufgabe, daß die Hülsen aus einem verschleißfesten Hartmaterial bestehen und eine Auskleidung aus kriechfähigem Weichmaterial aufweisen. - Diese Maßnahmen der Erfindung haben zur Folge, daß sich der Kupplungsstab durch hohe Anpassungfähigkeit an die im Betrieb auftretenden Beanspruchungen und Verformungen ebenso auszeichnet wie durch eine hohe Verschleißfestigkeit. Denn einerseits läßt sich eine hochbiegsame Stabachse verwirklichen, während andererseits die gleichsam einen gliederartigen Stabmantel bildenden Hülsen aus einem besonders verschleißfesten Material bestehen und dennoch den Biegebewegungen der Stabachse unschwer folgen können. In diesem Zusammenhang ist die kriechfähige Auskleidung der Hülsen von besonderer Bedeutung, weil das kriechfähige Material aufgrund der wechselnden Verformungen des Kupplungsstabes in die Ringspalte zwischen den mit entsprechenden Abständen auf die Stabachse aufgefädelten Hülsen eindringt und dort eine Pufferwirkung erzeugt, welche eine gegenseitige Beeinträchtigung der aus Hartmaterial bestehenden Hülsen infolge der auftretenden Beanspruchungen und insbesondere trogartigen Verformungen des Kupplungsstabes bei umlaufendem Transportband verhindert. Tatsächlich ist der erfindungsgemäße Kupplungsstab derart biegsam, daß nicht nur eine trog- oder muldenförmige Biegung, sondern selbst eine nahezu 180°-Biegung einwandfrei von dem Kupplungsstab aufgenommen werden kann, nämlich aufgrund seiner hochbiegsamen Stabachse und den unter Zwischenschaltung der Auskleidung darauf gliederartig angeordneten Hülsen, welche die Biegebewegungen der Stabachse im Hülsenabstand bzw. mit der durch die Länge der Hülsen vorgegebenen Teilung unschwer mitmachen können. Durch die Anpassungsfähigkeit des erfindungsgemäßen Kupplungsstabes an die wechselnden Verformungen des umlaufenden Transportbandes wird zugleich eine schonende Bandbehandlung im Bereich der miteinander verbundenen Bandenden erreicht, werden also solche Bandbeanspruchungen vermieden, die sonst aus der scharnierartigen Bandverbindung unter Verwendung von einerseits Riemenverbindern und andererseits eines gemeinsamen Kupplungsstabes resultieren. - Im Ergebnis wird nicht nur die Lebensdauer des erfindungsgemäßen Kupplungsstabes, sondern der Verbindung eines umlaufenden endlosen Transportbandes im ganzen erheblich erhöht.

Weitere erfindungswesentliche Merkmale sind im folgenden aufgeführt. So schlägt die Erfindung vor, und diesem Vorschlag kommt selbständige Bedeutung zu, daß die Hülsen aus einem austenitischen Mangan-Hartstahl bestehen, z. B. aus einem Mangan-Hartstahl X 120 Mn 12 mit
C 1,10 bis 1,30 %
Si 0,30 bis 0,50 %
Mn 12,00 bis 13,00 %
P ≦ 0,10 %
L ≦ 0,04 %.

Es besteht aber auch die Möglichkeit, daß die Hülsen aus einem gehärteten Stahl oder gehärteten Stahllegierungen bestehen, die sich ebenfalls durch eine hohe Widerstandsfähigkeit auszeichnen. Auch Metallegierungen mit größerer Widerstandsfähigkeit kommen für die Herstellung der Hülsen in Frage. Nach einer besonderen Ausführungsform bestehen die Hülsen aus einem Wolframstahl mit einem vorgegebenen, nämlich erhöhten Kohlenstoffgehalt. Ein erhöhter Kohlenstoff ist bei einem solchen Wolframstahl erforderlich, damit der vorhandene Kohlenstoff nicht vollständig durch das Wolfram zu Karbid abgebunden wird. Tatsächlich darf die Grundmasse des Wolframstahls nicht kohlenstofffrei werden, um eine hinreichende Härtbarkeit zu erhalten. - Im Rahmen der Erfindung können die Hülsen ferner auch aus Keramik bestehen.

Die Hülsen weisen vorzugsweise eine glatte Oberfläche auf. Es besteht aber auch die Möglichkeit, daß die Hülsen eine gerillte Oberfläche besitzen und jede Rille zur Lagerung eines Scharnierbogens eingerichtet ist, folglich eine wohldefinierte Anordnung der Scharnierbögen auf den Hülsen erreicht wird. Die Hülsen sind zweckmäßigerweise zur Lagerung von mindestens drei Scharnierbögen eingerichtet. Sie können als umfangsseitig geschlossene oder längsgeschlitzte Hülsen ausgebildet sein, um deren Montage auf die Stabachse zu erleichtern. Zu diesem Zweck können die Hülsen auch über sollbruchgerechte Verbindungsstege miteinander verbunden sein. Diese Verbindungsstege brechen im Einsatz des Kupplungsstabes infolge der auftretenden Biegebeanspruchungen und stören folglich nicht. - Weiter sieht die Erfindung vor, daß die Auskleidung aus Kautschuk oder einem kriechfähigen Kunststoff wie beispielsweise Polyamid besteht. Die Stabachse besteht zweckmäßigerweise aus einem weichen bzw. flexiblen Stahlkabel oder Kabel aus entsprechenden Stahllitzen. Es besteht aber auch die Möglichkeit, daß die Stabachse aus korrosionsbeständigen Metallen, Kunststoffmaterialien, Textilmaterialien oder deren Mischungen besteht, jedenfalls unschwer als hochbiegsame und nahezu flexible Stabachse hergestellt werden kann.

Im folgenden wird die Erfindung anhand einer lediglich ein Ausführungsbeispiel darstellenden Zeichnung näher erläutert; es zeigen:
- Fig. 1: in Draufsicht und ausschnittsweise Riemenverbinder mit ineinander greifenden Scharnierbögen ihrer Verbinderklammern und gemeinsamem Kupplungsstab,
- Fig. 2: einen Vertikalschnitt durch den Gegenstand nach Fig. 1 im Bereich einer Verbinderklammer und ihres Scharnierbogens,
- Fig. 3: eine Befestigungskrampe,
- Fig. 4: ausschnittsweise einen Kupplungsstab in abgewandelter Ausführungsform im Axialschnitt,
- Fig. 5: eine weitere abgewandelte Ausführungsform des Gegenstandes nach Fig. 4,
- Fig. 6: eine weitere abgewandelte Ausführungsform des Gegenstandes nach Fig. 4,
- Fig. 7: einen vergrößerten Ausschnitt aus dem Gegenstand nach Fig. 4,
- Fig. 8: einen Radialschnitt durch eine längsgeschlitzte Hülse für die Gegenstände nach den Fig. 4 und 5,
- Fig. 9: einen Radialschnitt durch eine längsgeschlitzte Hülse für den Gegenstand nach Fig. 6,
- Fig. 10: ausschnittsweise über sollbruchgerechte Verbindungsstege miteinander verbundene Hülsen für den Gegenstand nach Fig. 6 und
- Fig. 11: ausschnittsweise eine Draufsicht auf zwei miteinander verbundene Bandenden eines Transportbandes unter Verwendung von Riemenverbindern und dem erfindungsgemäßen Kupplungsstab.

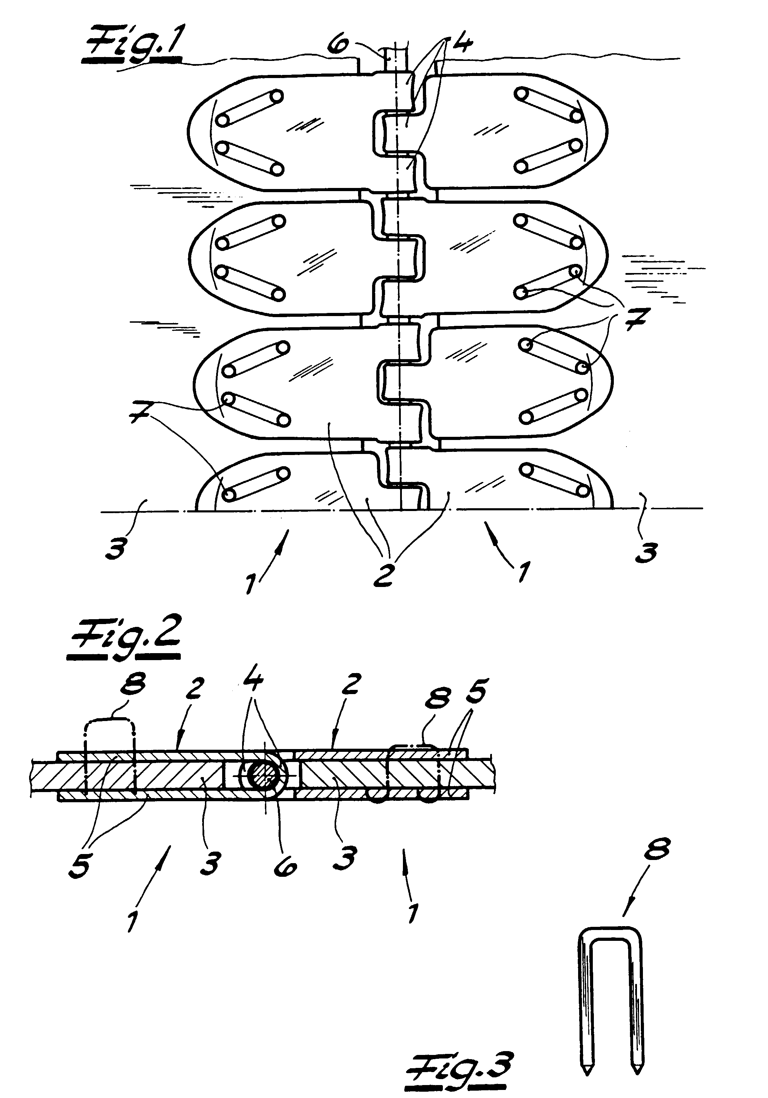

In den Figuren 1 bis 3 ist ein Riemenverbinder 1 mit U-förmigen Verbinderklammern 2 zum Verbinden der Bandenden 3 von Transportbändern dargestellt, wobei die Verbinderklammern 2 Scharnierbögen 4 und sich an die Scharnierbögen 4 anschließende Klammerschenkel 5 aufweisen. Durch die gelenkig ineinandergreifenden Scharnierbögen 4 von zwei Riemenverbindern 1 ist ein gemeinsamer Kupplungsstab 6 mit Vollquerschnitt hindurchgeführt. Der Kupplungsstab 6 und die Verbinderklammern 2 bestehen aus einem austenitischen Mangan-Hartstahl. Die Klammerschenkel 5 der Verbinderklammern 2 weisen Öffnungen 7 zum Hindurchtreiben von Befestigungskrampen 8 auf. Die Befestigungskrampen 8 bestehen ebenfalls aus einem austenitischen Mangan-Hartstahl.

Für die Herstellung der Kupplungsstäbe 6 und/oder Verbinderklammern 2 und/oder Befestigungskrampen 8 wird ein Mangan-Hartstahl X120Mn12 mit
C 1,10 bis 1,30 %
Si 0,30 bis 0,50 %
Mn 12,00 bis 13,00 %
P ≦ 0,10 %
S ≦ 0,04 verwendet. Im übrigen kann dieser Mangan-Hartstahl wahlweise Legierungselemente wie bis zu 0,1 % Cer, 1,0 bis 4,0 % Nickel und 1,0 bis 2,5 % Molybdän enthalten. Wenn sich die Riemenverbinder 1 bzw. ihre Verbinderklammern 2, der Kupplungsstab 6 und die Befestigungskrampen 8 im Einsatz befinden, erhöht sich die Zugfestigkeit von 800 bis 900 N/mm² auf mindestens 1500 N/mm² während das Dehnungsvermögen mindestens 45 % und regelmäßig mehr als 60 % beträgt.

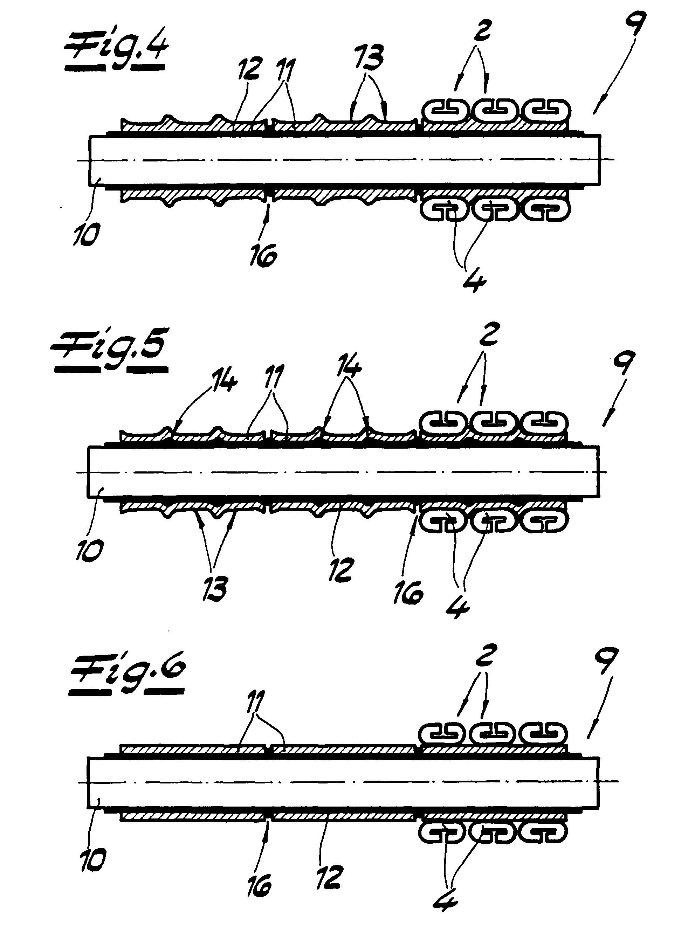

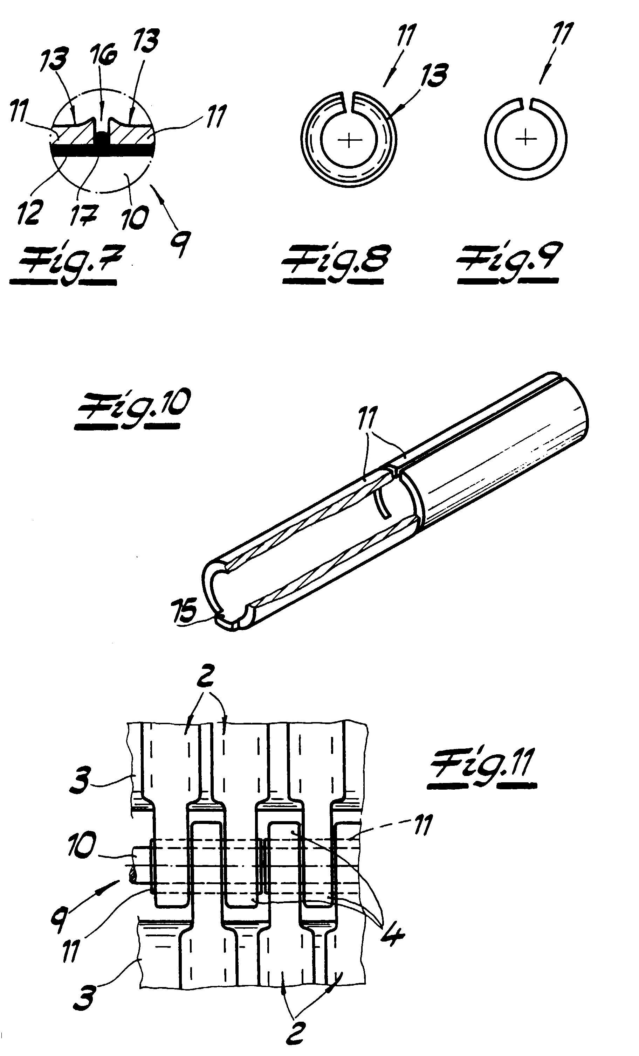

In den Figuren 4 bis 11 ist ein Kupplungsstab 9 für Riemenverbinder dargestellt, der eine biegsame Stabachse 10 und einen Stabmantel aus die Stabachse 10 umgebenden Hülsen 11 vorgegebener Länge aufweist. Die Hülsen bestehen aus einem verschleißfesten Hartmaterial und weisen eine Auskleidung 12 aus kriechfähigem Weichmaterial auf. Nach dem Ausführungsbeispiel bestehen die Hülsen 11 aus einem austenitischen Mangan-Hartstahl. Bei der Ausführungsform nach den Fig. 4 und 5 weisen die Hülsen 11 eine gerillte Oberfläche auf, wobei jede Rille 13 zur Lagerung eines Scharnierbogens 4 der Riemenverbinder eingerichtet ist. Bei dem Ausführungsbeispiel nach Fig. 5 können die Hülsen 11 innenseitig Ringnuten 14 zur Verankerung der Auskleidung 12 aufweisen. Bei der Ausführungsform nach Fig. 6 weisen die Hülsen 11 eine glatte Oberfläche auf, sind also im wesentlichen zylindrisch ausgebildet. Im Rahmen der Erfindung besteht die Möglichkeit, wechselweise Hülsen 11 mit glatter und gerillter Oberfläche zu verwenden, wobei die Hülsen 11 mit gerillter Oberfläche eine verschiebesichere Halterung des Kupplungsstabes 9 gewährleisten. Die Hülsen 11 sind zur Lagerung von mindestens drei Scharnierbögen 4 eingerichtet. Es kann sich um umfangsseitig geschlossene Hülsen 11 handeln. Aber auch der Einsatz von längsgeschlitzten Hülsen 11 ist möglich und empfiehlt sich schon aus montagetechnischen Gründen. Aus diesem Grunde besteht auch die Möglichkeit, die Hülsen 11 über sollbruchgerechte Verbindungsstege 15 im Zuge der Fertigung miteinander zu verbinden, wobei diese Verbindungsstege 15 bei in Betrieb befindlichem Kupplungsstab brechen und dadurch die Flexibilität bzw. hohe Biegsamkeit des Kupplungsstabes 9 gewährleistet bleibt.

Die Auskleidung 12 der Hülsen 11 kann aus Kautschuk oder einem Kunststoff bestehen. Infolge der auftretenden Wechselbeanspruchungen und insbesondere Biegebeanspruchungen kann die kriechfähige Auskleidung 12 teilweise in die Ringspalte 16 zwischen die Hülsen 11 eintreten und dort einen Puffer 17 bilden, der einerseits die Hülsen 11 in ihrer Anpassungsfähigkeit an die Verformungen bzw. Biegebewegungen der Stabachse 10 nicht blockiert, andererseits eine gegenseitige Deformation der Hülsen 11 infolge solcher Verformungen bzw. Biegebewegungen der Stabachse 10 ausschließt. Die Stabachse 10 ist nach dem Ausführungsbeispiel als ein weiches und weitgehend flexibles Stahlkabel ausgeführt.

## Patentansprüche

1. Verwendung von austenitischem Mangan-Hartstahl zur Herstellung eines Kupplungsstabes (6) zur Kupplung von Riemenverbindern (1) mit U-förmigen Verbinderklammern (2) beim Verbinden der Bandenden (3) von Transportbändern, wobei die Verbinderklammern (2) Scharnierbögen (4) und sich an die Scharnierbögen (4) anschließende Klammerschenkel (5) aufweisen und durch die gelenkig ineinandergreifenden Scharnierbögen (4) von zwei Riemenverbindern (1) der gemeinsame Kupplungsstab (6) hindurchgeführt ist, und wobei der Kupplungsstab (6) infolge verschleißbedingender Beanspruchungen zwischen den Scharnierbögen (4) der Verbinderklammern (2) und dem Kupplungsstab in diesen Verschleißzonen eine Oberflächenverfestigung im Wege der Kaltverformung bei unverändert hoher Biegsamkeit erfährt.

2. Verwendung von austenitischem Mangan-Hartstahl zur Herstellung von U-förmigen Verbinderklammern (2) mit Scharnierbögen (4) für Riemenverbinder (1) zum Verbinden der Bandenden (3) von Transportbändern, wobei die Scharnierbögen (4) infolge zunehmender Beanspruchungen eine zunehmende Oberflächenverfestigung erfahren.

3. Verwendung von austenitischem Mangan-Hartstahl zur Herstellung von Befestigungskrampen (8) zum Befestigen von U-förmigen Verbinderklammern (2) für Riemenverbinder (1) zum Verbinden der Bandenden (3) von Transportbändern, wobei die Verbinderklammern (2) Scharnierbögen (4) und sich an die Scharnierbögen (4) anschließende Klammerschenkel (5) mit Öffnungen (7) für den Durchgang der Befestigungskrampen (8) aufweisen, und wobei die Befestigungskrampen (8) infolge angreifender Beanspruchungen eine zunehmende Oberflächenverfestigung erfahren.

4. Verwendung nach einem der Ansprüche 1 bis 3, **dadurch gekennzeichnet ,** daß für die Herstellung der Kupplungsstäbe (6) und/oder Verbinderklammern (1) und/oder Befestigungskrampen (8) ein austenitischer Mangan-Hartstahl X120Mn12 mit
C 1,10 bis 1,30 %
Si 0,30 bis 0,50 %
Mn 12,00 bis 13,00 % verwendet wird.

5. Verwendung nach einem der Ansprüche 1 bis 4, dadurch gekennzeichnet, daß der austenitische Mangan-Hartstahl als Legierungselement bis zu 0,1 % Cer enthält.

6. Verwendung nach einem der Ansprüche 1 bis 5, dadurch gekennzeichnet, daß der austenitische Mangan-Hartstahl als Legierungselement 1,0 % bis 4,0 % Nickel enthält.

7. Verwendung nach einem der Ansprüche 1 bis 6, dadurch gekennzeichnet, daß der austenitische Mangan-Hartstahl als Legierungselement 1,0 % bis 2,5 % Molybdän enthält.

8. Verwendung nach einem der Ansprüche 1 bis 7, dadurch gekennzeichnet, daß der austenitische Mangan-Hartstahl durch Abschrecken von ca. 1000°C vergütet ist.

9. Riemenverbinder mit einem Kupplungsstab mit einer biegsamen Stabachse und einem Stabmantel aus die Stabachse umgebenden Hülsen vorgegebener Länge, **dadurch gekennzeichnet,** daß die Hülsen (11) aus einem verschleißfesten Hartmaterial bestehen und eine Auskleidung (12) aus kriechfähigem Weichmaterial aufweisen.

10. Riemenverbinder nach Anspruch 9, dadurch gekennzeichnet, daß die Hülsen (11) aus einem austenitischen Mangan-Hartstahl bestehen.

11. Riemenverbinder nach Anspruch 9, dadurch gekennzeichnet, daß die Hülsen (11) aus einem gehärteten Stahl oder gehärteten Stahllegierungen bestehen.

12. Riemenverbinder nach Anspruch 9, dadurch gekennzeichnet, daß die Hülsen (11) aus Metallegierungen mit großer Widerstandsfähigkeit bestehen.

13. Riemenverbinder nach Anspruch 9, dadurch gekennzeichnet, daß die Hülsen (11) aus einem Wolframstahl mit einem vorgegebenen Kohlenstoffgehalt bestehen.

14. Riemenverbinder nach Anspruch 9, dadurch gekennzeichnet, daß die Hülsen (11) aus Keramik bestehen.

15. Riemenverbinder nach einem der Ansprüch 9 bis 14, dadurch gekennzeichnet, daß die Hülsen (11) eine glatte Oberfläche aufweisen.

16. Riemenverbinder nach einem der Ansprüche 9 bis 14, dadurch gekennzeichnet, daß die Hülsen (11) eine gerillte Oberfläche aufweisen und jede Rille (13) zur Lagerung eines Scharnierbogens (4) eingerichtet ist.

17. Riemenverbinder nach einem der Ansprüche 9 bis 16, dadurch gekennzeichnet, daß die Hülsen (11) zur Lagerung von mindestens drei Scharnierbögen (4) eingerichtet sind.

18. Riemenverbinder nach einem der Ansprüche 9 bis 17, dadurch gekennzeichnet, daß die Hülsen (11) als umfangsseitig geschlossene oder längsgeschlitzte Hülsen ausgebildet sind.

19. Riemenverbinder nach einem der Ansprüche 9 bis 18, dadurch gekennzeichnet, daß die Hülsen (11) über sollbruchgerechte Verbindungsstege (15) miteinander verbunden sind.

20. Riemenverbinder nach einem der Ansprüche 9 bis 19, dadurch gekennzeichnet, daß die Auskleidung (12) aus Kautschuk oder Kunststoff, z. B. Polyamid, besteht.

21. Riemenverbinder nach einem der Ansprüche 9 bis 20, dadurch gekennzeichnet, daß die Stabachse (10) aus einem Stahlkabel oder Kabel aus Stahllitzen besteht.

22. Riemenverbinder nach einem der Ansprüche 9 bis 20, dadurch gekennzeichnet, daß die Stabachse (10) aus korrosionsbeständigen Metallen, Kunststoffmaterialien, Textilmaterialien oder deren Mischungen besteht.

## Claims

1. The use of austenitic manganese steel for the production of a coupling rod (6) for the coupling of belt connectors (1) comprising U-shaped connecting clips (2) when joining the belt ends (3) of conveyor belts, wherein the connecting clips (2) comprise hinge bows (4) and clip limbs (5) adjoining the hinge bows (4) and the common coupling rod (6) is passed through the hinge bows (4), which fit within one another in an articulated manner, of two belt connectors (1), and wherein, as a consequence of stresses which cause wear between the hinge bows (4) of the connecting clips (2) and the coupling rod, the coupling rod (6) experiences surface-hardening by cold-working in these wear zones whilst its high level of flexibility is unchanged.

2. The use of austenitic manganese steel for the production of U-shaped connecting clips (2) comprising hinge bows (4) for belt connectors (1) for joining the belt ends (3) of conveyor belts, wherein the hinge bows (4) experience an increasing level of surface-hardening as a consequence of increasing stresses.

3. The use of austenitic manganese steel for the production of fastening staples (8) for the fastening of U-shaped connecting clips (2) for belt connectors (1) for joining the belt ends (3) of conveyor belts, wherein the connecting clips (2) comprise hinge bows (4) and clip limbs (5) which adjoin the hinge bows (4) and which have openings (7) for the passage of the fastening staples (8), and wherein the fastening staples (8) experience an increasing level of surface-hardening as a consequence of increasing stresses.

4. A use according to any one of claims 1 to 3, characterised in that an austenitic X120Mn12 manganese steel comprising
1.10 to 1.30 % C
0.30 to 0.50 % Si
12.00 to 13.00 % Mn is used for the production of the coupling rods (6) and/or connecting clips (1) and/or fastening staples (8).

5. A use according to any one of claims 1 to 4, characterised in that the austenitic manganese steel contains up to 0.1 % cerium as an alloying element.

6. A use according to any one of claims 1 to 5, characterised in that the austenitic manganese steel contains 1.0 % to 4.0 % nickel as an alloying element.

7. A use according to any one of claims 1 to 6, characterised in that the austenitic manganese steel contains 1.0 % to 2.5 % molybdenum as an alloying element.

8. A use according to any one of claims 1 to 7, characterised in that the austenitic manganese steel is hardened and tempered by quenching from about 1000°C.

9. A belt connector having a coupling rod which comprises a flexible rod axis and a rod cladding comprising sleeves of predetermined length which surround the rod axis, characterised in that the sleeves (11) consist of a wear-resistant hard material and have a lining (12) of a soft material which is capable of exhibiting creep.

10. A belt connector according to claim 9, characterised in that the sleeves (11) consist of an austenitic manganese steel.

11. A belt connector according to claim 9, characterised in that the sleeves (11) consist of a hardened steel or of hardened steel alloys.

12. A belt connector according to claim 9, characterised in that the sleeves (11) consist of metal alloys with a high resistance.

13. A belt connector according to claim 9, characterised in that the sleeves (11) consist of a tungsten steel with a predetermined carbon content.

14. A belt connector according to claim 9, characterised in that the sleeves (11) consist of a ceramic.

15. A belt connector according to any one of claims 9 to 14, characterised in that the sleeves (11) have a smooth surface.

16. A belt connector according to any one of claims 9 to 14, characterised in that the sleeves (11) have a grooved surface and each groove (13) is designed for mounting a hinge bow (4).

17. A belt connector according to any one of claims 9 to 16, characterised in that the sleeves (11) are designed for mounting at least three hinge bows (4).

18. A belt connector according to any one of claims 9 to 17, characterised in that the sleeves (11) are constructed as sleeves which are closed circumferentially or which are slit longitudinally.

19. A belt connector according to any one of claims 9 to 18, characterised in that the sleeves (11) are joined to each other via connecting bridges (15) designed as break-off points.

20. A belt connector according to any one of claims 9 to 19, characterised in that the lining (12) consists of rubber or of a plastics material, e.g. polyamide.

21. A belt connector according to any one of claims 9 to 20, characterised in that the rod axis (10) consists of a steel cable or of cables- made of steel strands.

22. A belt connector according to any one of claims 9 to 14, characterised in that the rod axis (10) consists of corrosion-resistant metals, plastics materials, textile materials or mixtures thereof.

## Revendications

1. Utilisation d'un acier dur austénitique au manganèse pour la fabrication d'une tige d'accouplement (6) pour l'accouplement d'attaches de courroie (1) au moyen d'agrafes en U (2) lors de l'assemblage des extrémités (3) de bandes de transport, les agrafes (2) présentant des arcs formant charnière (4) ainsi que des branches (5) se raccordant aux arcs (4) et la tige d'accouplement (6) commune passant à travers les arcs (2) s'engageant l'un dans l'autre de manière articulée de deux attaches de courroie (1), et par suite de contraintes entraînant une usure entre les arcs formant charnières (4) des agrafes (2) et la tige d'accouplement, la tige d'accouplement (6) est soumise dans ses zones d'usure à une consolidation de surface au cours du formage à froid, sa grande flexibilité restant inchangée.

2. Utilisation d'un acier dur austénitique au manganèse pour la fabrication d'agrafes (2) en U avec des arcs formant charnières (4) pour des attaches de courroie (1) pour l'assemblage des extrémités (3) de bandes de transport, les arcs formant charnières (4) étant soumis à une consolidation de surface accrue par suite de contraintes accrues.

3. Utilisation d'un acier dur austénitique au manganèse pour la fabrication de crampons de fixation (8) pour la fixation d'agrafes en U (2) pour des attaches de courroie (1) destinées à l'assemblage des extrémités (3) de bandes de transport, les agrafes (2) présentant des arcs formant charnières (4) ainsi que des branches (5) se raccordant aux arcs (4) avec des ouvertures (7) pour le passage des crampons de fixation (8), et les crampons de fixation (8) étant soumis à une consolidation de surface accrue du fait de contraintes s'appliquant.

4. Utilisation selon l'une des revendications 1 à 3, caractérisée en ce que pour la fabrication des tiges d'accouplement (6) et/ou des agrafes (1) et/ou des crampons de fixation (8), on utilise un acier dur austénitique au manganèse X12OMn12 contenant
de 1,10 à 1,30 % de C
de 0,30 à 0,50 % de Si
de 12,00 à 13,00 % de Mn.

5. Utilisation selon l'une des revendications 1 à 4, caractérisée en ce que l'acier dur austénitique au manganèse contient jusqu'à 0,1 % de Cer en tant qu'élément d'alliage.

6. Utilisation selon l'une des revendications 1 à 5, caractérisée en ce que l'acier dur austénitique au manganèse contient de 1,0 % à 4,0 % de nickel en tant qu'élément d'alliage.

7. Utilisation selon l'une des revendications 1 à 6, caractérisée en ce que l'acier dur austénitique au manganèse contient de 1,0 % à 2,5 % de molybdène en tant qu'élément d'alliage.

8. Utilisation selon l'une des revendications 1 à 7, caractérisée en ce que l'acier dur austénitique au manganèse est soumis à un traitement de trempe par refroidissement brusque d'environ 1 000 °C.

9. Attache de courroie présentant une tige d'accouplement avec un axe flexible et une enveloppe faite de manchons de longueur donnée entourant l'axe de la tige, caractérisée en ce que les manchons (11) sont constitués d'un matériau dur résistant à l'usure et présentent un revêtement (12) fait en un matériau mou susceptible d'un fluage.

10. Attache de courroie selon la revendication 9, caractérisée en ce que les manchons (11) sont réalisés en un acier dur austénitique au manganèse.

11. Attache de courroie selon la revendication 9, caractérisée en ce que les manchons (11) sont réalisés en un acier trempé ou en des alliages d'acier trempés.

12. Attache de courroie selon la revendication 9, caractérisée en ce que les manchons (11) sont réalisés en des alliages de métaux présentant une grande résistance.

13. Attache de courroie selon la revendication 9, caractérisée en ce que les manchons (11) sont réalisés en un acier au tungstène avec une teneur en carbone donnée.

14. Attache de courroie selon la revendication 9, caractérisée en ce que les manchons (11) sont en céramique.

15. Attache de courroie selon l'une des revendications 9 à 14, caractérisée en ce que les manchons (11) présentent une surface lisse.

16. Attache de courroie selon l'une des revendications 9 à 14, caractérisée en ce que les manchons (11) présentent une surface rainurée et chaque rainure (13) est aménagée pour supporter un arc formant charnière (4).

17. Attache de courroie selon l'une des revendications 9 à 16, caractérisée en ce que les manchons (11) sont aménagés pour supporter au moins trois arcs formant charnières (4).

18. Attache de courroie selon l'une des revendications 9 à 17, caractérisée en ce que les manchons (11) sont réalisés en tant que manchons fermés sur leur périphérie ou en tant que manchons fendus longitudinalement.

19. Attache de courroie selon l'une des revendications 9 à 18, caractérisée en ce que les manchons (11) sont assemblés entre eux par des barrettes de liaison (15) destinées à la rupture.

20. Attache de courroie selon l'une des revendications 9 à 19, caractérisée en ce que le revêtement (12) est en caoutchouc ou en matière plastique, par exemple en polyamide.

21. Attache de courroie selon l'une des revendications 9 à 20, caractérisée en ce que l'axe (10) de la tige est constitué d'un câble d'acier ou d'un câble en torons d'acier.

22. Attache de courroie selon l'une des revendications 9 à 20, caractérisée en ce que l'axe (10) de la tige est constitué en métaux résistant à la corrosion, en matières plastiques, en matières textiles ou en mélanges de ceux-ci.
